Europäisches Patentamt

(19) European Patent Office

Office européen des brevets

(11) Veröffentlichungsnummer : **0 190 267**
**B1**

(12) EUROPÄISCHE PATENTSCHRIFT

(45) Veröffentlichungstag der Patentschrift :
05.04.89

(21) Anmeldenummer : 85903978.6

(22) Anmeldetag : 25.07.85

(86) Internationale Anmeldenummer :
PCT/DE 85/00253

(87) Internationale Veröffentlichungsnummer :
WO/8600989 (13.02.86 Gazette 86/04)

(51) Int. Cl.⁴ : **G 01 N 27/26**

(54) **ELEKTROPHORETISCHES VERFAHREN ZUR TRENNUNG VON BIOPOLYMEREN.**

(30) Priorität : 01.08.84 DE 3428385

(43) Veröffentlichungstag der Anmeldung :
13.08.86 Patentblatt 86/33

(45) Bekanntmachung des Hinweises auf die Patenterteilung : 05.04.89 Patentblatt 89/14

(84) Benannte Vertragsstaaten :
AT BE CH DE FR GB IT LI LU NL SE

(56) Entgegenhaltungen :
US–A– 3 506 554
Journal of Chromatography, Vol. 48, No. 2, 22
February 1970 I. M. Hais "Diagonal Techniques",
pages 200-206
Analytical Biochemistry, Vol. 46, No. 1, March 1972, T.
Hultin: "Two-dimensional Polyacrylamide Gel Electrophoresis of animal ribosomal proteins based on
charge inversion", pages 342-346
Chemical Abstracts, Vol. 92, NO. 17, 28 February
1980, Columbus, Ohio (US). Palukaitis: "Purification
and characterization of the circular and linear forms
of chrysanthenum stunt viroid"
Chemical Abstracts, Vol. 100, No. 3, 16 January 1984,
Columbus, Ohio (US). J. Schumacher et al.: "A two-
dimensional electrophoretic technique for the detection of circular viroids and virusoids"

(73) Patentinhaber : DIAGEN Institut für molekularbiologische Diagnostik GmbH
Niederheider Strasse 3
D-4000 Düsseldorf 13 (DE)

(72) Erfinder : Schumacher, Jürgen, Dr.
Karschhauser Str. 18
D-4006 Erkrath 2 (DE)
Erfinder : Riesner, Detlef, Prof. Dr.
Eichenwand 15
D-4000 Düsseldorf 12 (DE)

(74) Vertreter : Werner, Hans-Karsten, Dr. et al
Deichmannhaus am Hauptbahnhof
D-5000 Köln 1 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Bei der Erfindung handelt es sich um ein elektrophoretisches Verfahren, bei dem elektrisch geladene Biopolymere aufgrund ihrer unter verschiedenen Bedingungen vorliegenden unterschiedlichen makromolekularen Strukturen aufgetrennt werden.

Gelelektrophoretische Trennungen werden nicht nur in vielfältiger Weise zu rein wissenschaftlichern Fragestellung eingesetzt, sondern es besteht auch ein großer Bedarf im Bereich z. B. der Medizin, Phytopathologie und Gentechnologie. Eine Reihe von Krankheiten sind mit dem Auftreten wohl definierter Nukleinsäuremoleküle verbunden, die jedoch nur schwierig von den unzähligen Nukleinsäuren des gesunden Organismus zu trennen sind. Auch auf dem Gebiet der Proteine gehen sehr oft pathogene Veränderungen mit Änderungen im Elektrophoresemuster der Moleküle einher.

Zu einer sicheren Diagnose und zur Gewinnung hochreiner Therapeutika ist eine vollständige Abtrennung der krankheitsspezifischen Nukleinsäuren bzw. Proteine unerläßlich. Das Problem der Analyse trat u. a. in den letzten Jahren besonders deutlich bei sogenannten Viroidinfektionen auf. Viroide sind subvirale Erreger mehrerer wirtschaftlich schwerwiegender Pflanzenkrankheiten, die allein aus einer Nukleinsäure vom Molekulargewicht 100.000-120.000 bestehen und nicht die für Viren charakteristische Hülle besitzen. Auf den Philippinen sterben jährlich 300.000-500.000 Kokospalmen infolge einer Viroidinfektion ab. In Europa und Amerika sind besonders Gewächshauskulturen und Kartofelsaatgut betroffen.

In der Vergangenheit hat sich gezeigt, daß bei keinem anderen Verfahren in der Biochemie eine solche Vielzahl von Molekülen so reproduzierbar aufgetrennt werden kann wie in der Elektrophorese. Aus diesem Grund wurde und wird sie hauptsächlich bei analytischen Fragestellungen eingesetzt. Aber auch in präparativem Maßstab ist die Elektrophorese kaum zu ersetzen. Besonders gute Trennleistungen werden mit der zweidimensionalen Gelelektrophorese erzielt. Bei dieser Technik werden die Proben zunächst einer normalen Elektrophorese unterworfen. Danach wird der Gelstreifen, der die aufgetrennten Moleküle enthält, ausgeschnitten, um 90° gedreht für die 2. Dimension erneut einpolymerisiert, und die Proben werden unter anderen Bedingungen elektrophoretisch weiter aufgetrennt.

Man macht sich dabei zunutze, daß Biopolymere z. B. bei verschiedenen Temperaturen unterschiedliche molekulare Strukturen und somit unterschiedliche elektrophoretische Mobilität zeigen. Dadurch gelingt es, Moleküle, die bei einer bestimmten Temperatur im elektrischen Feld exakt gleiches Laufverhalten zeigen, bei einer anderen Temperatur zu trennen. Besonders ausgeprägt ist dieses Verhalten bei ringförmigen Nukleinsäuren, zu denen die oben erwähnten Viroide gehören. So fallen bei entsprechender Wahl der Bedingungen z. B. zirkuläre RNAs deutlich aus der Front der übrigen Nukleinsäuren heraus. Allerdings kann mit dieser Technik pro Gel immer nur eine Probe aufgetrennt werden. Aus diesem. Grund wurde eine modifizierte zweidimensionale Gelelektrophorese, die bidirektonale Gelelektrophorese, eingeführt, mit Hilfe derer pro Gel mehrere Proben untersucht, verglichen und quantifiziert werden können (Schumacher et al., (1983) Anal. Biochem. 135, 288-295). Speziell der Viroidnachweistest wird mittlerweile in den verschiedensten wissenschaftlichen Laboratorien mit großem Erfolg angewendet.

Alle diese Methoden haben aber den großen Nachteil, daß für die zweite Dimension ein Gelstreifen, der die in der ersten Dimension aufgetrennten Proben enthält, ausgeschnitten und erneut einpolymerisiert werden muß. Zudem erfolgt die Homogenisation der Gewebeproben mit Geräten, die nach jedem Aufschluß zur Vermeidung von Kontaminationen sorgfältigst gereinigt werden müssen. Auch der Einsatz von organischen Lösungsmitteln wie Phenol und/oder Chloroform kann für wissenschaftliche Aufgabenstellungen zwar akzeptiert werden, macht diese Verfahren für den Routineeinsatz aber unbrauchbar. So haben sich bisher z. B. in Saatzuchtbetrieben und staatlichen Untersuchungsanstalten viel teurere Methoden, die mit Radioaktivität oder schwer erhältlichen Antikörpern arbeiten, durchgesetzt.

Bei der vorgestellten Erfindung gemäß Anspruch 1 handelt es sich um ein gelelektrophoretisches Verfahren, das die bisher unumgänglich erscheinenden oben beschriebenen Nachteile ausschaltet. Es gelang dabei, die bekannte zweidimensionale Auftrennung in ein und derselben Gelmatrix durchzuführen, d. h. auf das komplizierte Ausschneiden und Einpolymerisieren des Gelstreifens zu verzichten. Die Biopolymere, z. B. die Viroide, werden zunächst bei Raumtemperatur in einer Richtung elektrophoretisch aufgetrennt. Durch Einfüllen fast kochenden Puffers erfahren die Nukleinsäuren eine Strukturänderung, die Elektrophoreserichtung wird umgekehrt, und die Viroid RNAs können von den übrigen Nukleinsäuren sowohl in analytischem als auch präparativem Maßstab getrennt werden.

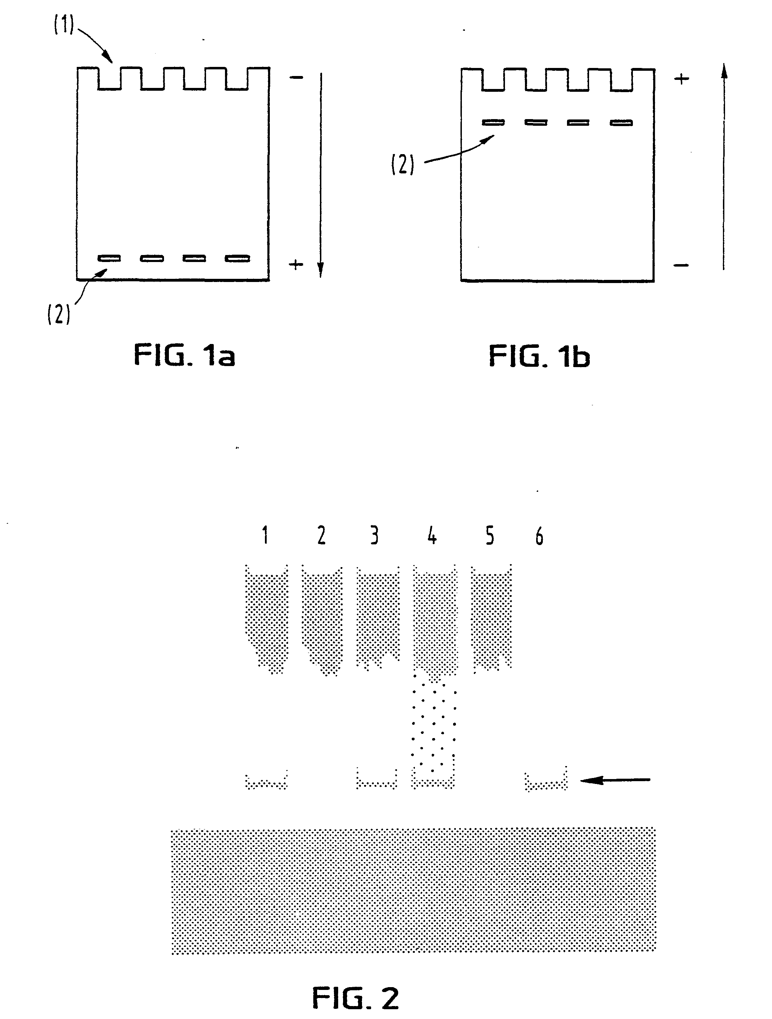

Folgendes Beispiel verdeutlicht das Verfahren. Die zu untersuchenden Gewebeextrakte werden in einem 5 % Polyacrylamid-Gel in Gegenwart von 89 mM Tris-Borat und 2,5 mM EDTA bei Raumtemperatur in einer handelsüblichen Gelelektrophorese-Apparatur, die in Figur 1 dargestellt ist, zusammen mit dem Farbstoff Xylen-Cyanol FF aufgetrennt. Hierzu werden die Proben in die Geltaschen (1) eingefüllt und solange einer Elektrophorese unterworfen, wobei die Nukleinsäuren zum (+) Pol hin wandern, bis Xylen-Cyanol den unteren Rand der Gelmatrix erreicht hat (Fig. 1a). Unter den beschriebenen Bedingungen läuft dieser Farbstoff exakt mit der Viroid RNA. Danach wird der Elektrophorese-Puffer durch heißen Puffer ersetzt, der 10 mM Tris-Borat und 0,3 mM EDTA enthält und die noch im Gel verbliebenen Nukleinsäure durch Umpolen der Spannung in entgegengesetzter Richtung in derselben Matrix wiederum der Elektrophorese unterworfen (Fig. 1b). Aufgrund der unter dieser Bedingung vorliegenden Struktur läuft die Viroid RNA deutlich langsamer als die übrigen noch in der Probe vorhandenen Nukleinsäuren. Die Elektrophorese wird abgestoppt, wenn der Farbstoff Xylen-Cyanol etwa 2/3 der Gelmatrix durchwandert hat. Nach Färbung des Gels mit Silber-Nitrat wird ein Bild erhalten wie es beispielhaft in Fig. 2 dargestellt ist. Deutlich ist in Proben aus infiziertem Gewebe die durch den Pfeil markierte herausfallende Viroid-Bande zu erkennnen (Bahnen 1, 3, 4). Die Bahnen 2 und 5 enthalten Nukleinsäureextrakt aus gesundem Gewebe. In Bahn 6 befindet sich als Referenz reine Viroid RNA. Diese Nachweismethode ist so empfindlich, daß noch 80 pg Viroid RNA, das entspricht 0,1 % des Viroidgehaltes, der bei einer starken Infektion im Gewebe gefunden wird, nachgewiesen werden können. Diese hohe Nachweisempfindlichkeit ermögicht den totalen Verzicht auf radioaktiv markierte Hybridisierungsproben. Dadurch kann auf viele Sicherheitsvorkehrungen verzichtet werden, die eine Routinediagnostik erschweren.

Die Trennleistung der vorgestellten Methode ermöglichte es, eine sehr einfache und daher zur Routine geeignete Probenvorbereitung zu entwickeln. Es kann z. B. direkt vom Preßsaft aus Blättern oder Wurzeln ausgegangen werden, aus dem nach Zusatz von Diethylpyrocarbonat die Nukleinsäure gefällt wird die entsprechenden Pressen sind weit verbreitet und für den Routinebetrieb ausgelegt. Es wurde auch gefunden, daß alternativ das entsprechende Pflanzengewebe mit Puffer, der Diethylpyrocarbonat enthält, in Einmalgefäßen wie kleinen Plastikröhrchen mit Glasperlen homogenisiert werden kann. Ein Schockfrieren des Gewebes in flüssiger Luft oder flüssigem Stickstoff vor dieser Homogenisation erhöht die Ausbeute an Nukleinsäure, ist aber nicht unbedingt notwendig. Nach der Fällung der Nukleinsäure mit Ethanol kann das Präzipitat unmittelbar elektrophoretisch aufgetrennt werden. Der wesentliche Vorteil gegenüber allen früher versuchten Methoden liegt somit darin, daß vollkommen auf gesundheitsschädliche organische Extraktionsmittel wie Phenol, Chloroform und Ether und damit ebenfalls wie bei der Radioaktivität auf besondere Sicherheitsmaßnahmen verzichtet werden kann. Eine große Zeitersparnis wurde dadurch erreicht, daß kein mechanisches Zerkleinerungsgerät, das, um ein Verschleppen der Infektionsträger zu vermeiden, nach jeder Probe sorgfältig gereinigt werden muß, angewendet wird. Die Zeitdauer für den gesamten Test beläuft sich vom Ernten des Pflanzenmaterials bis zum fertigen Gel auf weniger als 7 Stunden. Die reine Arbeitszeit beträgt weniger als eine Stunde.

Der vorgestellte Test eignet sich damit aufgrund seiner Schnelligkeit, Einfachheit, hohen Nachweisempfindlichkeit und durch den vollkommenen Verzicht auf Radioaktivität und somit seiner Sicherheit zum Routineeinsatz bei Reihenuntersuchungen.

Dieses hier für Viroide beschriebene Verfahren kann mit leichten Modifikationen für sehr viele andere Nukleinsäuren und geeignete Proteine oder andere Biomoleküle angewendet werden.

**Patentansprüche**

1. Elektrophoretisches Verfahren zur Trennung von elektrisch geladenen Biopolymeren unter Ausnutzung ihrer Strukturumwandlungen, bei dem zeitlich aufeinanderfolgend zwei Trennungen durchgeführt werden, von denen die eine unter strukturstabilisierenden, die andere unter strukturdestabilisierenden Bedingungen erfolgt, dadurch gekennzeichnet, daß in ein und derselben Elektrophoresematrix eine Trennung unter strukturstabilisierenden Bedingungen und anschließend unter strukturdestabilisierenden Bedingungen oder umgekehrt durchgeführt wird und eine Umkehrung der Elektrophoreserichtung der Biopolymeren zwischen den beiden Trennungen durch Umpolung der angelegten Spannung oder durch Umladung der Biopolymeren erfolgt.

2. Verfahren nach Anspruch 1, dadurch gekennzeichnet, daß die nachzuweisenden Biopolymere eine besonders niedrige oder eine besonders hohe Strukturstabilität besitzen oder der Polymerstrang kovalent zu einem Ring geschlossen ist.

3. Verfahren nach den Ansprüchen 1 bis 2, dadurch gekennzeichnet, daß die zu trennenden Biopolymere Proteine sind.

4. Verfahren nach den Ansprüchen 1 bis 2, dadurch gekennzeichnet, daß die zu trennenden Biopolymere Nukleinsäuren sind.

5. Verfahren nach den Ansprüchen 1 bis 2 und 3, dadurch gekennzeichnet, daß die zu trennenden Nukleinsäuren Viroide oder Virusoide sind.

6. Verfahren nach den Ansprüchen 1 bis 5, dadurch gekennzeichnet, daß der Wechsel von stabilisierenden zu destabilisierenden Bedingungen oder umgekehrt durch Änderung der Temperatur erreicht wird.

7. Verfahren nach den Ansprüchen 1 bis 6, dadurch gekennzeichnet, daß der Wechsel der Temperatur durch Einfüllen eines anders temperierten Elektrophoresepuffers erreicht wird.

**Claims**

1. An electrophoretic method for the separation of electrically charged biopolymers by utilization ot structural conversions thereof wherein two separations are carried out in sequence, one of which being effected under structure-stabilizing conditions and the other one being effected under structure-destabilizing conditions, characterized in that in one and the same electrophoresis matrix a separation is carried out under structure-stabilizing conditions and then under structure-destabilizing conditions, or in the reverse order, and a reversal of the electrophoresis direction of the biopolymers between the two separations is effected by changing the polarity of the applied voltage or by inversely charging the biopolymers.

2. The method according to claim 1, characterized in that the biopolymers to be detected have a particularly low or a particularly high structural stability or the polymer strand is covalently closed to form a ring.

3. The method according to claims 1 to 2, characterized in that the biopolymers to be separated are proteins.

4. The method according to claims 1 to 2, characterized in that the biopolymers to be separated are nucleic acids.

5. The method according to claims 1 to 2 and 3, characterized in that the nucleic acids to be separated are viroids or viruoids.

6. The method according to claims 1 to 5, characterized in that the change from stabilizing conditions to destabilizing conditions, or reversely, is effected by a change in temperature.

7. The method according to claims 1 to 6, characterized in that the change in temperature is effected by introducing an electrophesis buffer having a different temperature.

**Revendications**

1. Procédé électrophorétique pour séparer des biopolymères électriquement chargés en utilisant leurs modifications de structure, dans lequel deux séparations se succédant dans le temps sont effectuées, dont l'une a lieu dans des conditions stabilisant la structure et l'autre dans des conditions déstabilisant la structure, caractérisé en ce qu'une séparation dans des conditions stabilisant la structure, puis dans des conditions déstabilisant la structure, ou inversement, est effectuée dans une même matrice d'électrophorèse et qu'on produit une inversion du sens de l'électrophorèse des biopolymères entre les deux séparations par inversion de la polarité de la tension appliquée ou par transfert de la charge des biopolymères.

2. Procédé selon la revendication 1, caractérisé en ce que les biopolymères à déceler possèdent une stabilité de structure particulièrement faible ou particulièrement élevée, ou la chaîne de polymères covalente est fermée en un anneau.

3. Procédé selon les revendications 1 à 2, caractérisé en ce que les biopolymères sont des protéines.

4. Procédé selon les revendications 1 à 2, caractérisé en ce que les biopolymères sont des acides nucléiques.

5. Procédé selon les revendications 1 à 2 et 3, caractérisé en ce que les acides nucléiques à séparer sont des viroïdes ou des virusoïdes.

6. Procédé selon les revendications 1 à 5, caractérisé en ce que le changement des conditions stabilisatrices en conditions stabilisatrices ou inversement est obtenu par variation de température.

7. Procédé selon les revendications 1 à 6, caractérisé en ce que la variation de la température est obtenue en versant un agent tampon d'électrophorèse porté à une autre température.

FIG. 1a

FIG. 1b

FIG. 2